# EUROPEAN PATENT APPLICATION

(11) **EP 3 082 076 A1**
(43) Date of publication of application: **19.10.2016**
(21) Application number: 15290098.1
(22) Date of filing: 13.04.2015
(51) Int. Cl.: G06Q 10/02, G06Q 50/14

(54) **A SYSTEM AND METHOD FOR BOOKING A TRAVEL PRODUCT**

(71) Applicant: Amadeus S.A.S., 06410 Biot (FR)
(72) Inventor: Montegut, Francois, 06100 Nice (FR); Isnardon, Benedicte, 06400 Cannes (FR)
(74) Representative: Samson & Partner Patentanwälte mbB

(57) **Abstract**

Methods, systems, and computer program products for booking a travel product by incorporating a digital code associated with a travel offer into a machine-readable label and displaying the label as part of a travel offer advertisement for the travel product. The machine-readable label may be scanned by the prospective customer's mobile computing device to initiate communication between the mobile computing device and a reservation system. The customer may thereafter submit contact information and information regarding the travel offer to the reservation system. A travel dossier is generated with the received information and is queued for later review by a travel agent. The travel agent may thereafter review the travel dossier and adequately prepare to discuss the original travel offer and any alternative or substitute travel offers during a personal interaction with the customer.

## Description

### TECHNICAL FIELD

The invention generally relates to computers, databases, and computer systems and, in particular, to methods, systems, and computer program products for booking a travel product.

### BACKGROUND

In the highly competitive market of travel processing and booking of travel products, online travel merchants and offline travel merchants compete for customers. Customer acquisition, conversion, and retention are critical. Any mechanism for acquiring potential customers, at any touch point and at any time of the day, must be considered. However, offline travel agencies and airline offices are limited by working hour and resource constraints, which limit their ability to interact with potential customers. Further, when traditional brick and mortar travel agencies are closed or crowded, customers with travel related questions or a desire to book a travel product cannot utilize the travel agencies services. Similarly, a potential customer may observe an enticing travel offer, for example on an office window advisement, but the customer's schedule doesn't permit an immediate discussion with a travel agent. Often these potential sales leads are lost, as the potential customer turns to another travel agency or an online service to conduct the business. Even online travel agencies and airlines may miss potential leads, as call centers are overloaded by potential travel buyers favoring the manual intervention of a travel agent.

When either an offline travel agent or an online call center travel agent is contacted directly by a customer, the travel agent must take notes and spend time during the initial personal interaction simply acquiring the information necessary to create a customer profile in order to later research travel itineraries. The process may be time consuming and disjointed as the travel agent cannot immediately present the customer with important information such as eligible travel products or supplemental travel services. The initial personal interaction between the customer and the travel agent typically focuses on acquiring basic data from the customer, such as the customer's name, contact information, address, and other information necessary to form a useful customer profile. Therefore, due to the lengthy process of initiating travel bookings with a travel agent, the customer typically puts forth most of the effort to construct a travel itinerary and only comes to the travel agency when the customer is resolute on the desired travel details. The travel agent is left with no opportunity to up-sell or cross-sell the customer with related services or alternative travel products. Further, when the booking actually takes place, prices may have changed or the selected travel offer or preferred itinerary may not longer be available, causing frustration with the travel agent as well as the overall booking process.

Therefore, a need continues to exist in the art for a manner of facilitating the booking of travel products.

### SUMMARY

In an embodiment of the invention, a method is provided for booking a travel product. The method includes maintaining a travel offer database, wherein the travel offer database includes a plurality of travel offers and a digital code associated with each travel offer. The method further includes receiving, with an online service, a digital code associated with a travel offer and a name and contact information for a user from a mobile computing device connected to the online service. The method further includes queuing a travel dossier in a reservation system, the travel dossier including the name and contact information for the user received from the mobile computing device. The method further includes accessing the travel offer database based upon the received digital code to determine availability of the travel offer. The method further includes, in response to determining availability of the travel offer, associating the travel offer with the travel dossier in the reservation system. The method further includes communicating the queued travel dossier to a travel agent to enable the travel agent to contact the user using the contact information and complete a booking for the user for at least one travel product using the travel dossier.

In another embodiment of the invention, a system is provided for booking a travel product. The system includes a processor and a memory including instructions that, when executed by the processor, cause the system to maintain a travel offer database, wherein the travel offer database includes a plurality of travel offers and a digital code associated with each travel offer. The system further include instructions that, when executed by the processor, cause the system to receive, with an online service, a digital code associated with a travel offer and a name and contact information for a user from a mobile computing device connected to the online service. The system further include instructions that, when executed by the processor, cause the system to queue a travel dossier in a reservation system, the travel dossier including the name and contact information for the user received from the mobile computing device. The system further include instructions that, when executed by the processor, cause the system to access the travel offer database based upon the received digital code to determine availability of the travel offer. The system further include instructions that, when executed by the processor, cause the system to, in response to determining availability of the travel offer, associate the travel offer with the travel dossier in the reservation system. The system further include instructions that, when executed by the processor, cause the system to communicate the queued travel dossier to a travel agent to enable the travel agent to contact the user using the contact information and complete a booking for the user for at least one travel product using the travel dossier.

In another embodiment of the invention, a computer program product is provided for booking a travel product. The computer program product includes a non-transitory computer-readable storage medium and instructions stored on the non-transitory computer-readable storage medium that, when executed by a processor, cause a computer to maintain a travel offer database, wherein the travel offer database includes a plurality of travel offers and a digital code associated with each travel offer. The computer program product further include instructions that, when executed by the processor, cause the system to receive, with an online service, a digital code associated with a travel offer and a name and contact information for a user from a mobile computing device connected to the online service. The computer program product further include instructions that, when executed by the processor, cause the system to queue a travel dossier in a reservation system, the travel dossier including the name and contact information for the user received from the mobile computing device. The computer program product further include instructions that, when executed by the processor, cause the system to access the travel offer database based upon the received digital code to determine availability of the travel offer. The computer program product further include instructions that, when executed by the processor, cause the system to, in response to determining availability of the travel offer, associate the travel offer with the travel dossier in the reservation system. The computer program product further include instructions that, when executed by the processor, cause the system to communicate the queued travel dossier to a travel agent to enable the travel agent to contact the user using the contact information and complete a booking for the user for at least one travel product using the travel dossier.

### BRIEF DESCRIPTION OF THE SEVERAL VIEWS OF THE DRAWINGS

The accompanying drawings, that are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment, including a reservation system in communication with a mobile computing device over an online service such as the World Wide Web.
FIG. 2 is a diagrammatic view of an exemplary computer system of FIG. 1.
FIG. 3 is a schematic view of a reservation system, including a travel dossier database, a travel offer database, a profile database, and a business intelligence database.
FIG. 4 is a graphical view of an exemplary travel dossier table.
FIG. 5 is a graphical view of an exemplary travel offer table.
FIG. 6 is a graphical view of an exemplary customer profile table.
FIG. 7 is a graphical view of an exemplary business intelligence table.
FIG. 8 is a perspective view of a travel agency storefront and a mobile computing device.
FIG. 9 is a graphical view of an advertisement displaying information regarding a travel offer.
FIG. 10 is a graphical view of an online service interface on a mobile computing device.
FIG. 11 is a diagrammatic view of an exemplary set of actions and corresponding data flow between a customer, a reservation system, and a travel agent.
FIG. 12 is a flowchart of a booking process that may be performed by the reservation system of FIG. 1 in conjunction with a mobile computing device.
FIG. 13 is a flowchart of an alternative or substitute travel offer determination process that may be performed by the reservation system of FIG. 1.

### DETAILED DESCRIPTION

Embodiments of the invention are directed to methods and systems for booking a travel product. Embodiments of the invention may be implemented by one or more networked computers or servers. The networked computers may be operated by a Global Distribution System (GDS) and may provide processing and database functions for travel-related systems and modules.

The hereinafter-described embodiments will focus on an airline-oriented application wherein a service component is an airplane flight, a travel vehicle is a plane, a travel product is a travel itinerary which may include multiple flight segments, and the seats on that flight represent limited resources capable of being booked by customers, and potentially subject to no-shows, cancelations, or other itinerary changes that may result in a booked seat going unused by a customer at the time of departure of the flight. As such, the travel offers and travel products of the hereinafter-described embodiments relate to the underlying business environment of an airline. For example, a travel offer may relate to an offering to book travel from an origin city to a destination city on a particular day and back again on another particular day.

A travel offer is a collection of one or more travel-related products or one or more travel-related services which are offered to a customer at a particular price point. For example, a travel offer may include round trip flight from a first city to a second city for $99, or may include a round trip flight, a hotel reservation, and tickets to an event for $599. The customer is invited to purchase the travel offer, which results in purchasing, at the offered price, the underlying travel products or travel services compiled into the travel offer.

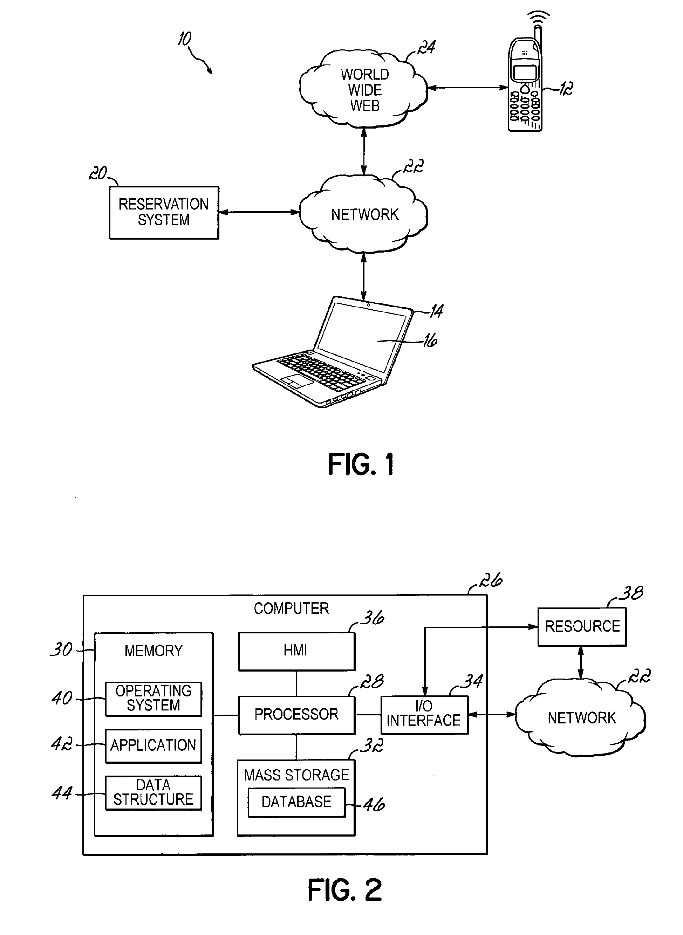

Referring now to FIG. 1, an operating environment 10 in accordance with an embodiment of the invention may include or reside within a reservation system 20, which may be located at a global distribution system (GDS). In general, the reservation system 20 operates to facilitate the booking of one or more travel products or travel services which may be offered to a prospective customer at a certain price point as a travel offer. The travel offer may be advertised and configured with parameters attractive to the prospective customer and may entice the customer to meet with a travel agent to discuss booking the travel product reflected in the travel offer. The travel offer may be displayed in an advertisement with a machine-readable label configured for use in providing a digital code associated with the travel offer to the customer when the customer scans the machine-readable label with a mobile computing device 12. The scanning of the machine-readable label connects the mobile computing device 12 to an online service such as the World Wide Web 24. The online service is configured to receive the digital code associated with the travel offer and the name and contact information of the customer and pass the information to the reservation system 20.

The reservation system 20 is configured to collect customer data prior to a personal interaction between a prospective customer and a travel agent. The collected information along with details of the travel offer may be used to form a travel dossier associated with the prospective client. The travel dossier encapsulates the client's contact information and details regarding the travel offer. The travel dossier may comprise or may include a passenger name record (PNR) or a total travel record (TTR) populated with contact information supplied by the customer. Additional customer information may be retrieved and supplied from a profile database if the customer has previously interacted with the reservation system 20 or any other component or element in the booking process. For example, if a customer has previously travelled on a particular travel carrier, the travel carrier may have saved customer profile information in the profile database. When the customer later inquires about a travel offer, the reservation system may access the profile database to retrieve customer information and populate the travel dossier with this additional information. Additional travel offer information may be retrieved and supplied from a travel offer database which may be configured to identify the underlying travel product reflected in the travel offer using the digital code as a reference key or reference identifier. Thus, upon scanning of the machine-readable label on an advertisement displaying the travel offer, entering contact information, and sending the information to the reservation system 20, a travel dossier is created and populated with customer information and travel offer information. The travel dossier is thereafter provided to a travel agent for use in preparing for the initial personal interaction with the customer.

In an embodiment of the invention, prior to the reservation system 20 providing the travel dossier to the travel agent, the travel offer is validated to determine whether the travel offer is still viable. Given the dynamic nature of the travel industry, a flight may have been overbooked or cancelled or fare pricing may have changed such that the travel offer is no longer valid. If reservation system 20 determines that the travel offer is no longer valid, the reservation system 20 determines one or more substitute travel offer which are generally comparable to the original travel offer. The travel dossier is thereafter populated with information regarding the substitute travel offer. This process saves the travel agent from providing information to the customer regarding an invalid travel offer as well as making the initial personal interaction between the customer and the travel agent more productive and efficient as substitute travel offers have already been determined.

In an embodiment of the invention, prior to the reservation system 20 providing the travel dossier to the travel agent, the reservation system 20 may determine one or more alternative travel offers which are generally comparable to the original travel offer. The travel dossier is thereafter populated with the information regarding the alternative travel offers, which allows the travel agent to discuss alternative travel offer options with the customer.

In an embodiment of the invention, prior to the reservation system 20 providing the travel dossier to the travel agent, the reservation system 20 may determine travel offers or services which are complimentary to one or more of the original travel offer, a substitute travel offer, or an alternative travel offer. For example, if the original travel offer relates to air travel to a particular destination city, the reservation system 20 may be configured to suggest booking dinner reservations at a particular restaurant or booking tickets to a show in the destination city during the duration of the trip. The travel dossier is thereafter populated with the information regarding the complementary travel products or services, which allows the travel agent to discuss these complementary products and services with the customer.

After the travel dossier is constructed, the reservation system 20 queues or stores the travel dossier for review by the travel agent at the travel agent's discretion. A notification may be communicated to the travel agent in the form of an appointment request or an email inviting the travel agent to review the travel dossier and contact the prospective customer to discuss the next steps of the booking process. The travel agent may receive the notification and review the travel dossier on a display screen 15 of a computing device 14. The travel agent may also perform additional research on computing device 14 in an effort to prepare for the initial personal interaction with the client. Thus, the initial personal interaction between the customer and the travel agent is thereby more efficient and may generate additional business or increase goodwill between the prospective customer and the travel agent.

Operating environment 10 may further include a network 22. The mobile computing device 12, computing device 14, reservation system 20, and World Wide Web 24 may communicate with each other through network 22. Network 22 may include one or more private or public networks (e.g. the Internet) that enable the exchange of data.

Referring now to FIG. 2, the mobile computing device 12, computing device 14, reservation system 20, and World Wide Web 24 of operating environment 10 may be implemented on one or more computing devices or systems, such as exemplary computer system 26. The computer system 26 may include a processor 28, a memory 30, a mass storage memory device 32, an input/output (I/O) interface 34, and a Human Machine Interface (HMI) 36. The computer system 26 may also be operatively coupled to one or more external resources 38 via the network 22 or I/O interface 34. External resources may include, but are not limited to, servers, databases, mass storage devices, peripheral devices, cloud-based network services, or any other suitable computer resource that may used by the computer system 26.

The processor 28 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 30. Memory 30 may include a single memory device or a plurality of memory devices including, but not limited, to read-only memory (ROM), random access memory (RAM), volatile memory, non-volatile memory, static random access memory (SRAM), dynamic random access memory (DRAM), flash memory, cache memory, or any other device capable of storing information. The mass storage memory device 32 may include data storage devices such as a hard drive, optical drive, tape drive, non-volatile solid state device, or any other device capable of storing information.

Processor 28 may operate under the control of an operating system 40 that resides in memory 30. The operating system 40 may manage computer resources so that computer program code embodied as one or more computer software applications, such as an application 42 residing in memory 30, may have instructions executed by the processor 28. In an alternative embodiment, the processor 28 may execute the application 42 directly, in which case the operating system 40 may be omitted. One or more data structures 44 may also reside in memory 30, and may be used by the processor 28, operating system 40, or application 42 to store or manipulate data.

The I/O interface 34 may provide a machine interface that operatively couples the processor 28 to other devices and systems, such as the network 22 or external resource 38. The application 42 may thereby work cooperatively with the network 22 or external resource 38 by communicating via the I/O interface 34 to provide the various features, functions, applications, processes, or modules comprising embodiments of the invention. The application 42 may also have program code that is executed by one or more external resources 38, or otherwise rely on functions or signals provided by other system or network components external to the computer system 26. Indeed, given the nearly endless hardware and software configurations possible, persons having ordinary skill in the art will understand that embodiments of the invention may include applications that are located externally to the computer system 26, distributed among multiple computers or other external resources 38, or provided by computing resources (hardware and software) that are provided as a service over the network 22, such as a cloud computing service.

The HMI 36 may be operatively coupled to the processor 28 of computer system 26 in a known manner to allow a user to interact directly with the computer system 26. The HMI 36 may include video or alphanumeric displays, a touch screen, a speaker, and any other suitable audio and visual indicators capable of providing data to the user. The HMI 36 may also include input devices and controls such as an alphanumeric keyboard, a pointing device, keypads, pushbuttons, control knobs, microphones, etc., capable of accepting commands or input from the user and transmitting the entered input to the processor 28.

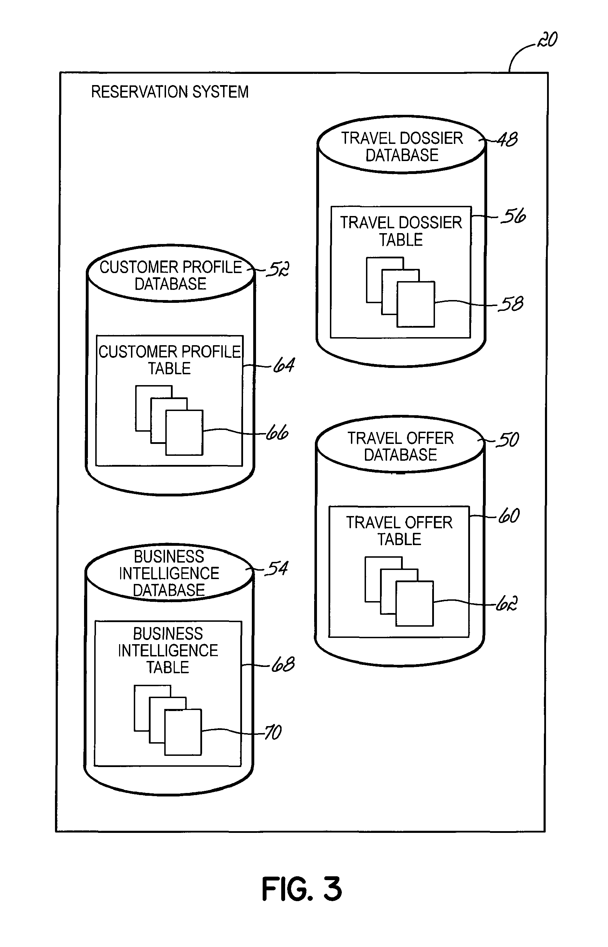

A database 46 may reside on the mass storage memory device 32, and may be used to collect and organize data used by the various systems and modules described herein. The database 46 may include data and supporting data structures that store and organize the data. In particular, the database 46 may be arranged with any database organization or structure including, but not limited to, a relational database, a hierarchical database, a network database, or combinations thereof. A database management system in the form of a computer software application executing as instructions on the processor 28 may be used to access the information or data stored in records of the database 46 in response to a query, where a query may be dynamically determined and executed by the operating system 40, other applications 42, or one or more modules. As shown in FIG. 3, in an embodiment of the invention, the database 46 may comprise a travel dossier database 48, a travel offer database 50, a customer profile database 52, a business intelligence database 54, or a combination thereof.

Referring now to FIG. 1, the reservation system 20 may coordinate with or utilize information stored or provided by one or more of the mobile computing device 12, the computing device 14, the network 22, the World Wide Web 24, or any other or any other suitable computer system, or combination thereof. In general, the reservation system 20 provides various travel provider services related to supporting and enhancing the operations of the travel provider. For example, the reservation system 20 may provide information regarding the passenger and the extended travel record associated with the passenger. This includes passenger information such as the passenger's name, other travelers, the frequent flyer number, contact information, and trip information. The reservation system 20 may include or communicate with an inventory system (not shown), which provides information regarding the inventory and availability of the underlying travel provider. For example, the inventory system may provide information regarding the availability of seating or passage on an airline flight. The inventory system may also provide information regarding the availability of hospitality providers such as hotels and car rentals.

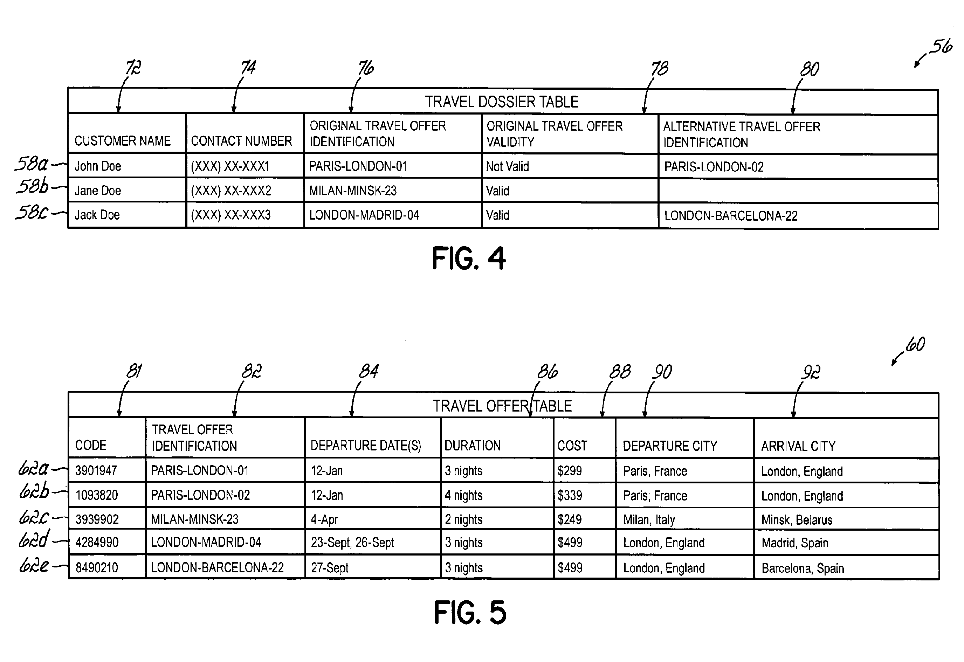

Referring to FIGS. 3 and 4, the reservation system 20 may include the travel dossier database 48 configured to store and maintain a travel dossier table 56. A pseudo-database table representing travel dossier table 56 is shown in FIG. 4. Travel dossier table 56 may include multiple rows, with each row representing a travel dossier, referenced hereinafter as a travel dossier 58. In the embodiment of the travel dossier table 56 illustrated in FIG. 4, each travel dossier 58 includes a customer name field 72, a contact number field 74, an original travel offer identification field 76, an original travel offer validity field 78, and an alternative travel offer identification field 80.

The customer name field 72 of each travel dossier 58 contains a customer name for identifying the customer associated with the travel dossier 58, namely, the individual who scanned the machine-readable label associated with the travel offer represented by the travel offer. The contact number field 74 includes a customer contact number such a phone number for use in contacting the customer associated with the travel dossier 58. The original travel offer identification field 76 includes a reference identifier to a particular travel offer associated with the travel dossier 58. The original travel offer is the travel offer which originally enticed the customer to scan an advertisement to inquire further about the travel offer displayed on the advertisement. The original travel offer validity field 78 includes information regarding whether the original travel offer is valid or not. During the intervening time between when an advertisement regarding the original travel offer is created and displayed and when the customer scans the advertisement, the original travel offer may have become invalid due to a flight becoming full or cancelled or for a number of other reasons. The alternative travel offer identification field 80 includes information regarding any travel offers which may be an alternative or a supplement to the original travel offer. For example, if the original travel offer is no longer available, reservation system 20 may consider a substitute travel offer and store this information in alternative travel offer identification field 80. Further, reservation system 20 may determine an additional travel offer for consideration by the customer and store this travel offer in travel offer identification field 80. One alternative travel offer identification field 80 is shown for exemplary purposes only, as the invention encompasses any number of travel offer identification field 80 included in the travel dossier 58.

Referring to FIGS. 3 and 5, the reservation system 20 may include the travel offer database 50 configured to store and maintain a travel offer table 60. A pseudo-database table representing travel offer table 60 is shown in FIG. 5. Travel offer table 60 may include multiple rows, with each row representing a particular travel offer, referenced hereinafter as travel offer 62. In the embodiment of the travel offer table 60 illustrated in FIG. 5, each travel offer 62 includes a code field 81, a travel offer identification field 82, a departure date field 84, a duration field 86, a cost field 88, a departure city field 90, and an arrival city field 92.

Code field 81 contains a reference code for travel offer 62. This reference code or digital code may be used by the machine-readable label to reference the travel offer. Travel offer identification field 82 of each travel offer 62 contains a travel offer identification entry for referencing the particular travel offer 62. For example, travel offer 62A includes the travel offer identification field entry of "PARIS-LONDON-01". Departure date field 84 includes a date entry for identifying when the associated travel offer 62 is scheduled to depart. Duration field 86 includes information regarding how long the associated travel offer 62 is scheduled to extend. The cost field 88 includes a monetary amount associated with the travel offer 62. Departure city field 90 includes a reference to a particular city, whereby the travel offer 62 is scheduled to depart therefrom. Arrival city field 92 includes information regarding the destination of the travel offer 62.

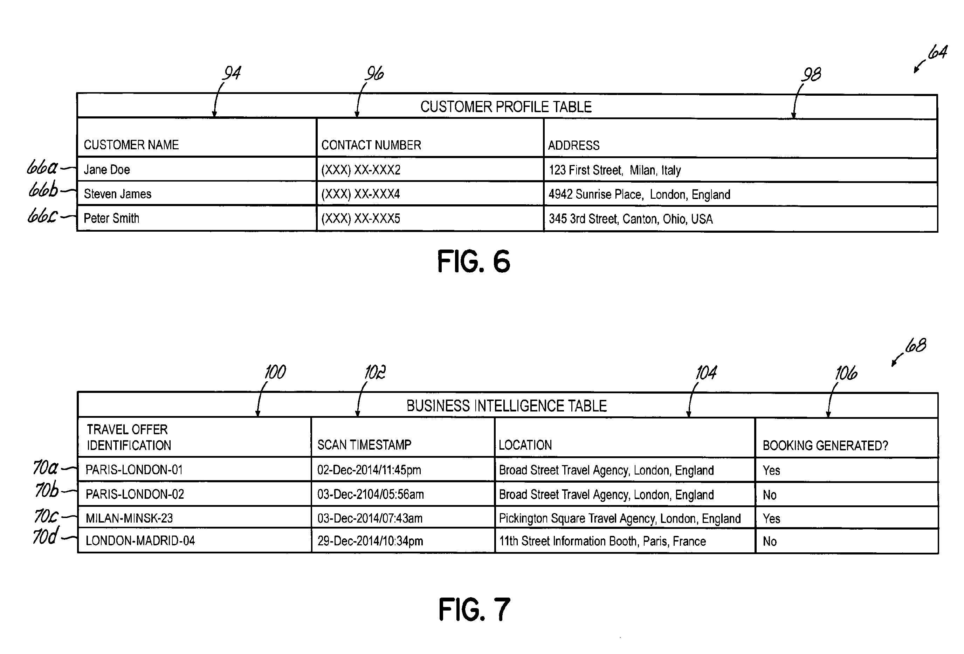

Referring to FIGS. 3 and 6, the reservation system 20 may include the customer profile database 52 configured to store and maintain a customer profile table 64. A pseudo-database table representing the customer profile table 64 is shown in FIG. 6. Customer profile table 64 may include multiple rows, with each row representing a particular customer profile, referenced hereinafter as a customer profile 66. In the embodiment of the customer profile table 64 illustrated in FIG. 6, each customer profile 66 includes a customer name field 94, a customer number field 96, and an address field 98. A particular customer profile 66 is generated when a customer communicates with reservation system 20 for the first time. Upon successive communications with reservation system 20, the customer profile 66 for the customer may be referenced to provide additional data to reservation system 20 as needed.

The customer name field 94 contains a customer name for identifying the customer associated with the customer profile 66. The contact number field 96 includes a customer contact number such as a phone number for use in contacting the customer associated with the customer profile 66. The address field 98 includes information regarding the address of the customer associated with the customer profile 66. Information stored within customer profile table 64 may be acquired through previous interactions with a customer or may be derived from a frequent flyer program or another customer loyalty type of program. Upon scanning of a travel offer by a prospective customer and transferring the basic customer information to the reservation system 20, the reservation system 20 checks the customer profile table 64 to determine whether a customer profile 66 exists for the prospective customer. If a customer profile 66 exists, the reservation system 20 populates the travel dossier 58 generated by the scanning of the advertisement with additional information regarding the customer and retrieved from the profile 66. This additional information may be used by the travel agent to more efficiently service the customer.

Referring to FIGS. 3 and 7, the reservation system 20 may include the business intelligence database 54 configured to store and maintain a business intelligence table 68. A pseudo-database table representing the business intelligence table 68 is shown in FIG. 7. Business intelligence table 68 may include multiple rows, with each row representing a particular business intelligence datapoint, referred to hereinafter as business intelligence datapoint 70. In the embodiment of the business intelligence table 68 illustrated in FIG. 7, each business intelligence datapoint 70 includes a travel offer identification field 100, a scan timestamp field 102, a location field 104, and a booking generated field 106.

The travel offer identification field 100 is a reference identifier to a particular travel offer of the underlying system. The information contained within travel offer identification field 100 may refer to a travel offer 62 found in travel offer table 60. Scan timestamp field 102 includes information regarding when an advertisement reflecting the travel offer 62 was scanned by a potential customer. For example, business intelligence datapoint 70A includes an entry within scan timestamp field 102 of December 2, 2014 at 11:45 PM. This scan timestamp entry indicates when a potential customer scanned an advertisement regarding the travel offer "LONDON-MADRID-04". The location field 104 includes information regarding where the scanning of the travel offer advertisement occurred. For example, the entry location 104A indicates that the "LONDON-MADRID-04" travel offer advertisement was scanned at Broad Street Travel Agency in London, England. The booking generated field 106 indicates whether the scanning of the travel offer advertisement ultimately resulted in a booking of the travel offer. Each business intelligence datapoint 70 may be used to analyze and generate valuable business information relating to the statistics regarding a particular travel offer, market penetration, location information, or any other valuable information. In an embodiment of the reservation system 20, each scan of an advertisement by a mobile computing device 12 generates a new business intelligence datapoint 70 for entry into the business intelligence table 68.

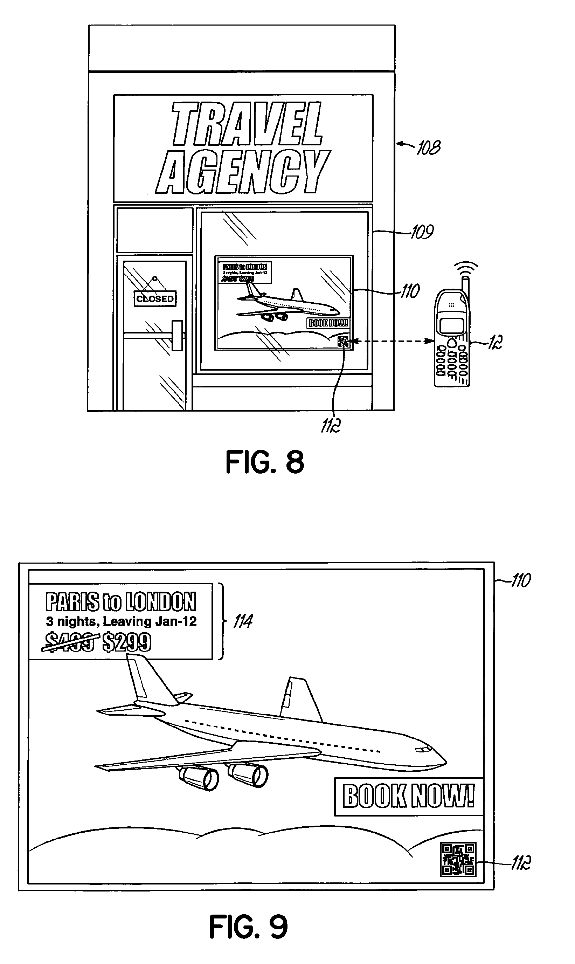

As shown in FIGS. 8 and 9, a travel agent may be associated with a physical location such as a store 108 having a storefront 109. The storefront 109 may be used to display an advertisement 110 incorporating the details of a particular travel offer 62 in a set of indicia 114. The set of indicia 114 generally portrays the information stored in the respective travel offer 62 of travel offer table 60. For example, the advertisement 110 of FIG. 9 is associated with travel offer 62A. Travel offer 62A is a round trip travel deal from Paris, France, to London, England, as reflected in departure city field 90A and arrival city field 92A. The set of indicia 114 further reflects the departure date information stored in departure date field 84A, the duration information stored in the duration field 86A, and the cost information stored in cost field 88A. Through the set of indicia 114, the advertisement 110 displays information regarding an offer to book the travel offer 62 in an effort to entice the prospective customer to consider booking the travel offer 62.

In an embodiment of the invention, the advertisement 110 may be coupled with another marketing element, rather than the storefront 109. For example, advertisement 110 may be disposed on a magazine advertisement, on a brochure, or on a flyer. The advertisement 110 may be incorporated into an electronic display style advertisement located at a town square, at a bus station, or in a taxi cab. The advertisement 110 may even be located on a t-shirt or another fabric or clothing item. As such, advertisement 110 may be disposed in or on any medium for use in attracting attention to the travel deal incorporated into the advertisement 110.

The advertisement 110 may include a machine readable tag, such as a near field communication tag (NFC tag) or may include a machine readable label, such as a quick response code (QR code) or a bar code. Hereinafter, the machine readable tag or label will be referred to as label 112. Label 112 includes a mechanism for transferring the digital code associated with the underlying travel offer 62 from the label 112 into a scanning device. As such, label 112 may be scanned by the mobile computing device 12 of a prospective customer to input the digital code into the mobile computing device 12. The digital code associated with a particular travel offer 62 is stored in digital code field 81 as shown in FIG. 5, and may be scanned and received by the mobile computing device 12 to input information regarding the travel offer 62 portrayed on the advertisement 110 into mobile computing device 12. The scanning of the label 112 also links the mobile computing device 12 with the reservation system 20 via an online service such as via World Wide Web 24. The online service provides information regarding the travel offer 62 for review and consideration by the customer. Thus, the physical printed advertisement 110, by incorporating the digital code stored in digital code field 81 of a travel offer 62 into label 112, may be used to generate a digital representation of the advertisement 110 in a prospective customer's mobile computing device 12 for use in furtherance of the booking process. If the travel agency is closed or the customer's schedule is such that the customer can't remain to discuss the travel offer 62 with a travel agent, the customer is free to physically move on from the advertisement 110 as the travel offer 62 is represented in the mobile computing device 12 and the customer is linked with the reservation system 20 by way of the online service.

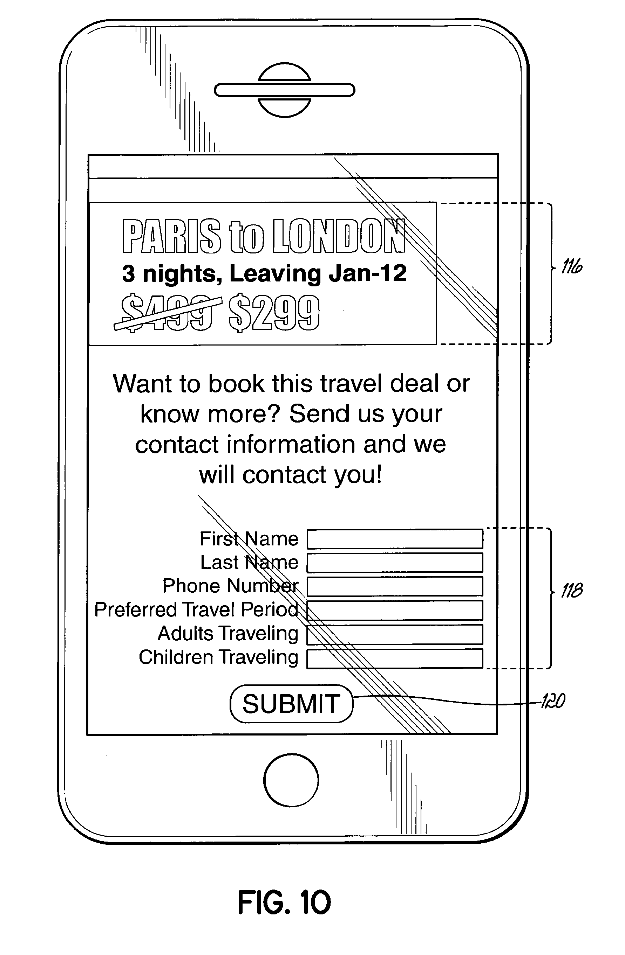

Referring to FIG. 10, once the digital code is received into the customer's mobile computing device 12, an interface 116 is initiated which retrieves the information stored within the travel offer table 60 for the associated digital code and displays this information to the customer via the interface 116. Interface 116 further includes a client information input element 118 for receiving manually entered information regarding the customer, such as the customer's first name, last name, phone number, preferred travel, and the number of adults and children that will be traveling. The interface 116 further provides an actuation button 120 for posting the underlying digital code and the information provided in the contact information input element 118 to the reservation system 20. This information is encapsulated into a datagram or another mechanism for providing this information to reservation system 20 for use in facilitating the booking process.

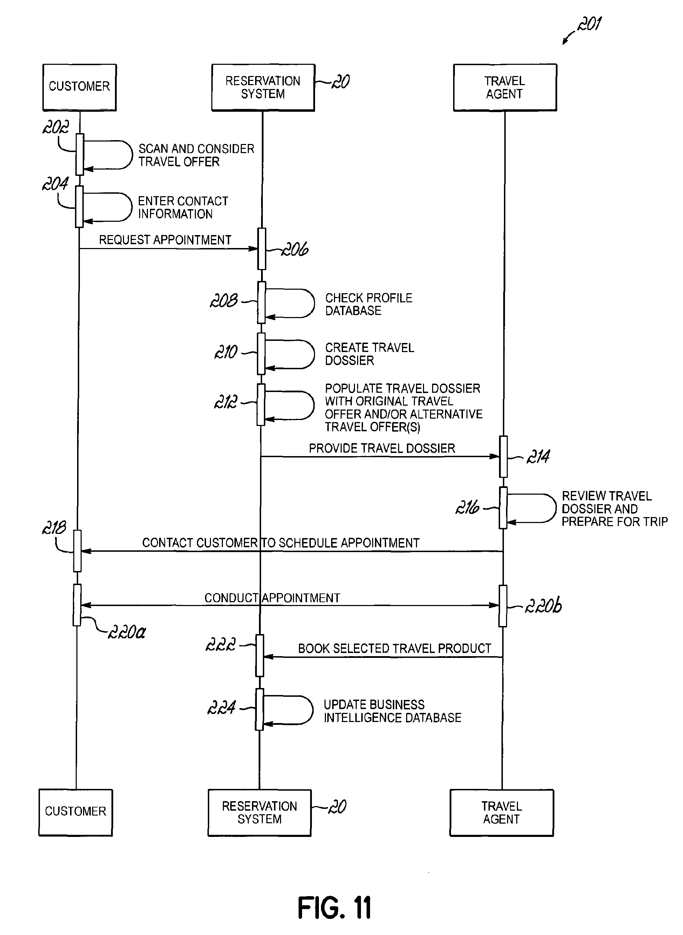

Referring now to FIG. 11, a process 200 for booking a travel product for a customer in accordance with the invention is shown in diagrammed therein. The process 200 starts with a process block 202, wherein the customer observes and interacts with an advertisement displayed on a storefront or another visible area, using a mobile computing device to scan a machine readable label on the advertisement. The customer's mobile computing device thereafter utilizes an interface which displays information regarding the underlying travel offer and invites the clients to enter contact information therein. Once the customer has considered the offer on the mobile computing device, process block 202 proceeds to a process block 204, whereby the customer enters contact information into the mobile computing device and requests an appointment with a travel agent to discuss the underlying travel offer. Once the client requests an appointment, process block 204 moves to a process block 206.

In process block 206, the reservation system 20 receives the customer's request for an appointment along with the customers entered contact information. Upon receipt of this information, process block 206 moves to a process block 208. In process block 208, reservation system 20 compares the information entered by the customer with existing profiles in the profile database to determine whether the particular customer has had previous interactions with the reservation system 20. For example, if the customer has previously booked another travel product, the profile database will include contact information for the customer. In process block 208, if the profile database indicates the customer has had previous interactions with reservation system 20, all information relevant to this booking is retrieved from the profile database for use in later processes. If reservation system 20 determines that the customer is not represented in the profile database, reservation system 20 updates the profile database to include a profile entry for the customer along with any information entered by the customer. Thereafter, process block 208 moves to a process block 210.

In process block 210, the reservation system 20 creates a travel dossier within the travel dossier database. The travel dossier includes information relating to the customer, the customer's profile information, the customer's contact information, and the underlying original travel offer reflected in the scanned travel offer. Process block 210 thereafter moves to a process block 212. In process block 212, the travel dossier is populated with information relating to the original travel offer. Further, if the reservation system 20 determines that the original travel offer is no longer available or valid, process block 212 compiles one or more alternative travel offers that are similar to the original travel offer and enters this alternative travel offer into the travel dossier. Reservation system 20 may also consider alternative travel offers regardless of whether the original travel offer is available or valid. Thus, the travel dossier may include the original travel offer reflected in the scanned offer as well as alternative travel offers for use by the travel agent in discussing multiple travel options with the customer. Thereafter, process block 212 provides a travel dossier to the travel agent in a process block 214. The travel dossier may be queued or stored either on reservation system 20 or the travel agents local computer or any other mechanism for storing the travel dossier for later retrieval by the travel agent. Once the travel dossier is queued, process block 214 moves to a process block 216.

In process block 216, the travel agent retrieves the travel dossier from the queue and reviews the information contained therein. The travel agent may use the information contained within the travel dossier to prepare and consider the customer's request and the travel offers contained in the travel dossier. Once the travel agent is sufficiently prepared and knowledgeable of the customer's needs, the travel agent contacts the customer to schedule an appointment in a process block 218. In process block 218, the travel agent may call the customer using the contact information supplied by the customer or may contact the customer by e-mail or by any other mechanism for interacting with the customer to schedule an appointment between the travel agent and the customer to discuss the original travel offer as well as any alternative travel offers. Once the customer and the travel agent have scheduled an appointment, process block 218 moves to a process block 220, whereby the customer and the travel agent conduct an appointment regarding the original travel offer and any alternative or substitute travel offers. The travel agent is knowledgeable customer's needs and may have worked out any scheduling issues or other considerations because of the travel agent's access to the travel dossier before the actual appointment is conducted. This allows the appointment to be extremely efficient and professional and may facilitate opportunities to provide the customer with additional services or discuss further travel business with the travel agent.

Once the appointment is conducted in process block 220, the travel agent books the travel offer, travel products, travel options, or itinerary ultimately selected by the customer in a process block 222. The booked travel offer is the selected travel option of the customer after discussions with the travel agent during the appointment. The customer and the travel agent may have changed the details of the underlying travel offer or the associated travel products or services, or the customer may have selected an alternative or substitute travel offer, or the customer and the travel agent may have constructed a new package of travel products and services or a new itinerary to satisfy the customer's desires. Each of these dynamic booking scenarios are referred to hereinafter collectively as the selected travel offer. Thereafter, reservation system 20 receives the booking request from a travel agent and updates the underlying reservation for the selected travel offer in order to book the customer. Process block 222 thereafter proceeds to a process block 224.

In process block 224, the business intelligence database is updated with the relevant information regarding the customer's scanning of the travel offer and any relevant information associated with the entire booking process from the scanning of the travel offer to the booking of the selected travel offer. Information which may be relevant to future business considerations such as the location of the underlying advertisement and the time of day of the scanning of the advertisement are considered and stored in the business intelligence database for later use. Business analytics may be conducted upon the business intelligence database to determine the most efficient placement of marketing materials or the most attractive travel offers to customers.

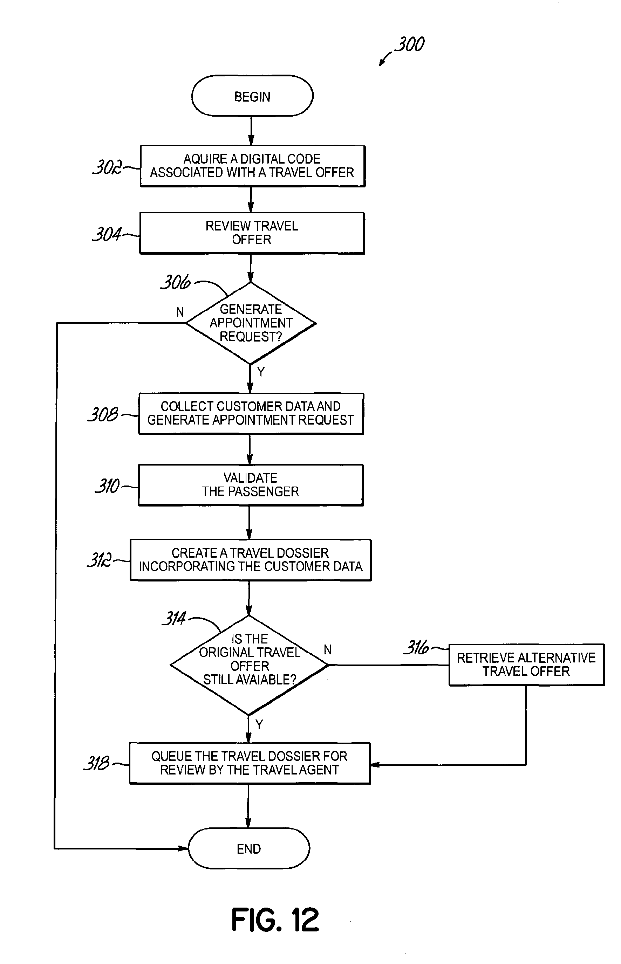

Referring now to FIG. 12, a flowchart depicts a process 300 that may be executed by reservation system 20 in concert with the advisement 110 and the mobile computing device 12. Process 300 begins with a block 302 in which a customer acquires a digital code associated with a travel offer. The customer may acquire the digital code by scanning a machine readable label or tag on an advertisement displaying the travel offer. Acquiring a digital code associated with travel offer allows the customer to view information regarding the travel offer on the customer's mobile computing device. Thereafter, the process block 302 proceeds to a process block 304. Process of block 304 allows the customer to read and consider information regarding the travel offer and determine whether the customer wishes to continue with the booking process to book the travel products or services contained in the travel offer. Thereafter, process block 304 proceeds to a process block 306.

Process block 306 determines whether the customer wishes to generate an appointment request. If process block 306 determines that the customer does not wish to generate an appointment request ("NO" branch of decision block 306), process block 306 terminates process 300. Conversely, if process block 306 determines that the customer does wish to generate an appointment request ("YES" branch of decision block 306), process block 306 proceeds to a process block 308.

Process block 308 collects the customer's contact information and generates a request for an appointment or personal interaction between the customer and a travel agent. Thereafter, process block 308 proceeds to a process block 310, wherein the received customer information is compared to a customer profile database to determine whether the customer is represented in the customer profile database. If the customer is represented in the customer profile database, process block 310 proceeds to a process block 312. Alternatively, if process block 310 determines that the customer is not represented in the customer profile database, the customer profile database is updated with the customer's contact information and process block 310 proceeds to process block 312. In process block 312, a travel dossier is created incorporating the received customer data and any relevant or useful customer data available from the customer profile database. The travel dossier also includes information regarding the underlying original travel offer, such as the travel offer identification, departure dates, duration, costs, departure city, or arrival city. Generally, any information that may be useful to the travel agent is incorporated into travel dossier to aid the travel agent in conducting the personal interaction with the customer. Thereafter process block 312 moves to a process block 314.

Process block 314 determines whether the original travel offer is still available for booking. If process block 314 determines that the original travel offer is still available for booking ("YES" branch of process block 314), process block 314 proceeds to a process block 318. Conversely, if process block 314 determines that the original travel offer is not available for booking ("NO" branch of process block 314), process block 314 proceeds to a process block 316. In process block 316, an alternative travel offer is retrieved and entered into the travel dossier as the original travel offer is not available for booking. Thereafter, process block 316 proceeds to process block 318. In process block 318, the travel dossier is queued for future review by the travel agent. The travel dossier includes the contact information of the customer, the original travel offer, and potentially an alternative travel offer if the original travel offer is not available. Thereafter, process 300 terminates.

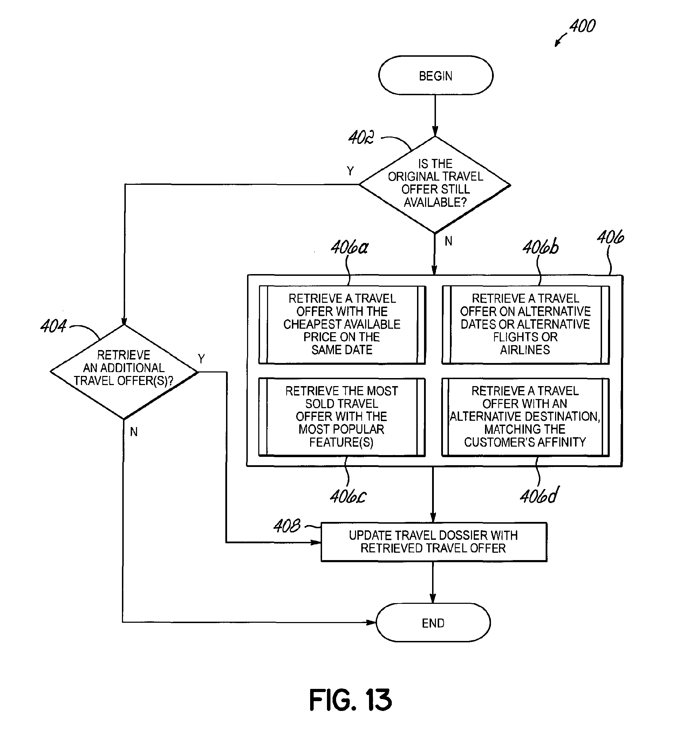

Referring now to FIG. 13, a flowchart depicts a process 400 that may be executed by reservation system 20 to dynamically determine alternative or additional travel offers, either because the original travel offer is no longer valid or to provide the travel agent with supplemental or additional travel offers to discuss with the customer. The original travel offer may no longer be valid because of fare increases, overbooking of the flight, or because the underlying flight has been cancelled.

Process 400 begins with a process block 402, wherein a determination is made as to whether the original travel offer is still available. If the original travel offer is still available ("YES" branch of process block 402), process block 402 proceeds to a process block 404. If the original travel offer is no longer still available ("NO" branch of process block 402), process block proceeds to a process block 406. Process block 404 determines whether an additional travel offer should be retrieved. Additional travel offers may be retrieved in order to provide the travel agent with additional offerings for the customer in addition to the original travel offer. One or more additional travel offers may provide the customer with pre-formed relevant alternatives and also aid in cross-selling and up-selling by the travel agent. The administrator of reservation system 20 or another decision making entity may decide whether to configure reservation system 20 to provide additional travel offers if necessary. If process block 404 determines that additional travel offers should be retrieved ("YES" branch of process block 404), process block 404 proceeds to process block 406. If process block 404 determines that additional travel offer should not be retrieved ("NO" branch of process block 404), process 400 terminates.

In process block 406, one or more sub-process may be initiated to retrieve an additional travel offer or a substitute travel offer. For example, process block 406 may initiate sub-process 406A to retrieve the travel offer having the cheapest or lowest priced fare available on the same departure date as the original travel offer. Process block 406 may initiate sub-process 406B to retrieve the travel offer generally matching the original travel offer, but with an alternative date or using an alternative flight or airline. Process block 406 may initiate a sub-process 406C to retrieve the travel offer with the most sales or having the most popular features. Process block 406 may initiate a sub-process 406D to retrieve the travel offer with an alternative destination that matches the customer's affinity. For example, if the original travel offer is a beach vacation, another beach focused travel offer may be retrieve by sub-process 406D.

Process block 406 may alternatively construct or dynamically create a customized travel offer for the customer based on metrics and information associated with the customer. For example, if the original travel offer includes a round trip flight to Paris, France, and the customer profile information reveals that the customer previously visited Rouen, France, process block 406 may construct a travel offer which includes a round trip flight to Rouen, France, with a train ticket to visit Paris during the trip. Thus, process block 406 may be configured to not only retrieve travel offers, but may also be configured to dynamically construct travel offers to provide to the travel agent.

After one or more of the sub-processes of process block 406 are initiated and the resulting one or more alternative or substitute travel offer are retrieved or constructed, process block 406 proceeds to a process block 408. In process block 408, the underlying travel dossier is updated with the additional or substitute travel offers retrieved or constructed in process block 406. Thereafter, process 400 terminates. When the travel agent examines the travel dossier in preparation of discussing travel options with the customer, at least one alternative or substitute travel offer is incorporated therein for use in discussing travel options with the customer. The travel agent may thereby efficiently make counter proposals to the customer to secure the potential lead.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions which are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

Various program code described herein may be identified based upon the application within which it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flowcharts, sequence diagrams, and/or block diagrams.

In certain alternative embodiments, the functions, acts, and/or operations specified in the flowcharts, sequence diagrams, and/or block diagrams may be re-ordered, processed serially, and/or processed concurrently consistent with embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method of booking a travel product, the method comprising:
maintaining a travel offer database, wherein the travel offer database includes a plurality of travel offers and a digital code associated with each travel offer;
receiving, with an online service, a digital code associated with a travel offer and a name and contact information for a user from a mobile computing device connected to the online service;
queuing a travel dossier in a reservation system, the travel dossier including the name and contact information for the user received from the mobile computing device;
accessing the travel offer database based upon the received digital code to determine availability of the travel offer;
in response to determining availability of the travel offer, associating the travel offer with the travel dossier in the reservation system; and
communicating the queued travel dossier to a travel agent to enable the travel agent to contact the user using the contact information and complete a booking for the user for at least one travel product using the travel dossier.

2. The method of claim 1 further comprising:
in response to determining unavailability of the travel offer, generating an alternate travel offer; and
in response to generating an alternate travel offer, associating the alternate travel offer with the travel dossier in the reservation system.

3. The method of claim 2 wherein the travel offer is associated with a trip period and a price, the method further comprising:
incorporating the trip period, the price, or a combination thereof into the generation of the alternative travel offer.

4. The method of claim 2 or claim 3 further comprising:
performing a dynamic travel offer packaging to generate the alternate travel offer.

5. The method of any of claims 1 to 4 wherein the digital code is received from a quick response code or a near field communication chip incorporated into an advertisement of the travel offer.

6. The method of claim 5 further comprising:
maintaining a business intelligence database;
collecting a set of metrics associated with the quick response code, the near field communication chip, the advertisement, the travel offer, or a combination thereof; and
storing the set of metrics in the business intelligence database.

7. The method of any of claims 1 to 6 further comprising:
accessing the travel offer database based upon the received digital code to determine a potential additional item; and
associating the potential additional item with the travel dossier in the reservation system to enable the travel agent to notify the user of the potential additional item.

8. The method of any of claims 1 to 7 further comprising:
creating, by the reservation system, a booking file including the name and contact information for the user; and
associating the booking file with the travel dossier in the reservation system.

9. The method of claim 8 wherein the booking file is a passenger name record or a total travel record.

10. The method of claim 1 further comprising:
generating an alternate travel offer; and
associating the alternative travel offer with the travel dossier in the reservation system.

11. The method of claim 10 wherein the travel offer is associated with a trip period and a price, and the method further comprising:
incorporating the trip period, the price, or a combination thereof into the generation of the alternative travel offer.

12. The method of any of claims 1 to 11 further comprising:
accessing a customer profile database associated with the travel agent to determine whether the database includes a record for the user; and
in response to determining the customer profile database does not include a record for the user, storing the name and contact information of the user as a new record in the customer profile database.

13. A system for booking a travel product, the system comprising:
a processor; and
a memory including instructions that, when executed by the processor, cause the system to:
maintain a travel offer database, wherein the travel offer database includes a plurality of travel offers and a digital code associated with each travel offer;
receive, with an online service, a digital code associated with a travel offer and a name and contact information for a user from a mobile computing device connected to the online service;
queue a travel dossier in a reservation system, the travel dossier including the name and contact information for the user received from the mobile computing device;
access the travel offer database based upon the received digital code to determine availability of the travel offer;
in response to determining availability of the travel offer, associate the travel offer with the travel dossier in the reservation system; and
communicate the queued travel dossier to a travel agent to enable the travel agent to contact the user using the contact information and complete a booking for the user for at least one travel product using the travel dossier.

14. The system of claim 13, wherein the instructions, when executed by the processor, further cause the system to perform the method of any of claims 2 to 12.

15. A computer program comprising instructions that, when executed by a processor, cause a computer to perform the methods of any of claims 1 to 12.
